# EUROPEAN PATENT APPLICATION

(11) **EP 2 008 850 A2**
(43) Date of publication of application: **31.12.2008**
(21) Application number: 08159100.0
(22) Date of filing: 26.06.2008
(51) Int. Cl.: B60J 10/00, B60J 10/12

(54) **Roof weather strip**

(30) Priority: 27.06.2007 JP 2007168325
(71) Applicant: AISIN SEIKI KABUSHIKI KAISHA, Kariya City, Aichi Pref. (JP)
(72) Inventor: Dosaki, Tomohiro Toyoda Gosei Co.,Ltd., Nishikasugai-gun Aichi 452-8564 (JP); Mine, Kiminori Toyoda Gosei Co.,Ltd., Nishikasugai-gun Aichi 452-8564 (JP); Kotsuchihashi, Toru Toyota Jidosha Kabushiki Kaisha, Toyota-shi Aichi 471-8571 (JP); Kato, Katsutoshi Aisin Engineering Co.,Ltd., 1-15, Hachikencho Kariya-shi Aichi 448-8605 (JP)
(74) Representative: Winter, Konrad Theodor

(57) **Abstract**

A roof weather strip (16) includes a fitting base part (21) and a seal part (22) having a hollow part. The seal part has a sealing wall (25) which is configured to be brought into pressure contact with a peripheral part of a roof panel forming a roof opening, when a movable roof closes the roof opening. The seal part also has an upper connecting region (26) so as to connect the sealing wall to an upper part of the fitting base part. The upper connecting region is provided with a corrugated part (27) on its inner face opposed to the hollow space, and the corrugated part has a plurality of convex parts (28) and concave parts (29) which are alternately formed. An arm part (31) is integrally formed so as to extend from the fitting base part downward at an outer peripheral side, and a distal end of the arm part is connected to a lower end of the seal part. Because a plurality of the concave parts of the corrugated part exist in the upper connecting region, stress is easily dispersed.

## Description

### BACKGROUND OF THE INVENTION

### 1. Field of the Invention

The present invention relates to a roof weather strip in an annular shape to be fitted to an outer peripheral part of a movable panel which can open and close a roof opening formed in a roof panel of a vehicle.

### 2. Related Art.

A movable roof which is called as a moon roof or a sun roof has been provided, in some cases, with respect to a roof opening in a roof panel of a vehicle such as an automobile. This movable roof includes a movable panel having a glass panel or a panel plate etc, as a main component, and a roof weather strip which is provided along a peripheral part of the movable panel. Some of the movable roofs constructed in this manner are configured to be tilted or slid, but in any case, the roof opening is brought into an open state or in a closed state, by moving the movable roof. At a time of opening and closing the roof opening, a seal part of the roof weather strip having a hollow part is collapsed and deformed, whereby sealing is performed between the movable panel and the roof panel of the vehicle.

By the way, when the roof opening is closed by moving the movable roof, it is concerned that a strange noise such as squeaking sound or bang may occur between the roof weather strip and the roof opening due to variation of the movable roof when it has been produced or assembled. Such a strange noise is likely to occur in a region corresponding to a backward end part of the movable roof. In order to eliminate such concern, it is desirable to construct the roof weather strip so that load applied to the seal part at the time of closing may not be extraordinarily increased, even though a gap between the movable panel and the roof panel is made narrower than a determined gap due to the aforesaid variation. As more specific measure for restraining an increase of the load, it is considered, for example, to make a wall thickness of the seal part having the hollow space as small as possible in its entirety. However, there is a limit of production in making the wall thickness of the seal part smaller in its entirety, and in fact, it is difficult to make the wall thickness smaller than predetermined.

Under the circumstances, there has been a related art in which a notch (that is, a local thin-walled part) is provided in a part of the seal part thereby to restrain an increase of load at a time of closing (Reference should be made to Japanese Patent-Publication No. JP-A-11-321339, for example). By providing the local thin-walled part in this manner, it is possible to deform the seal part positively in the thin-walled part at the time of closing, and hence, an increase of the load can be restrained.

However, in case where the local thin-walled part is provided as described above, the thin-walled part will make a crooked region, and stress of deformation will be concentrated on the thin-walled part. For this reason, there is such anxiety that after a long term use of the roof weather strip, a "wear-out" mayoccur in the thin-walled part, which incurs deterioration of sealing performance.

### SUMMARY OF THE INVENTION

Thus a need exists for a roof weather strip which is not susceptible to the drawback mentioned above. The invention provides a roof weather.strip in an annular shape to be fitted to an outer peripheral part of a movable panel which can open and close a roof opening formed in a roof panel of a vehicle, in which occurrence of a strange noise at a time of opening or closing the roof opening can be restrained, and at the same time, deterioration of sealing performance due to wear-out of the roof weather strip can be prevented.

Aspects of the invention for solving the above described problems will be described hereunder item by item. In addition, operations and advantages particular to means will be described according to necessity.
(1) a roof weather strip in an annular shape to be fitted to an outer peripheral of a movable panel which can open and close a roof opening formed in a roof panel of a vehicle, the roof weather strip including, at least in a region corresponding to a backward end part of the movable panel,
   a fitting base part to be fitted to the movable panel, and
   a seal part having a hollow part which is expanded outward from the fitting base part,
   characterized in that the seal part has a sealing wall to be brought into pressure contact with a peripheral part of the roof panel forming the roof opening when said movable panel is closing the roof opening, and an upper connecting region which connects the sealing wall to an upper part of the fitting base part, the upper connecting region being provided with a corrugated part including a plurality of convex parts and concave parts alternately formed, on its face opposed to the hollow space.
   According to the above aspect of the invention, in at least the region of the roof weather strip in the annular shape corresponding to the backward end part of the movable panel, the fitting base part is fitted to the movable panel. When the roof opening closed, the sealing wall of the seal part having the hollow space which is expanded outward at the outer peripheral side with respect to the fitting base part is brought into pressure contact with a peripheral part of the panel forming the roof opening, whereby sealing is performed between the movable panel and the roof panel of the vehicle. According to means 1, the upper connecting region of the seal part which connects the sealing wall to the upper part of the fitting base part is provided with the corrugated part including a plurality of the convex parts and the concave parts alternately formed, on its face opposed to the hollow space. For this reason, the regions of the upper connecting region mainly corresponding to the concave parts are more likely to be deformed. Therefore, even though some variation may occur in producing and assembling the movable roof, and the gap between the movable roof and the roof panel is made narrower than determined, such a phenomenon that load applied to the seal part at the time of closing may be extraordinarily increased will be restrained. As the results, it is possible to restrain occurrence of a strange noise such as squeaking sound or bang.
   Moreover, because a plurality of the concave parts of the corrugated part exist in the upper connecting region, stress can be easily dispersed, as compared with the related art in which there is such anxiety that the stress is concentrated on one point, Accordingly, occurrence of "wear-out" due to concentration of the stress can be restrained, and hence, deterioration of the sealing performance can be prevented.
(2) In the invention, at least the two convex parts of the upper connecting region adj acent to the sealing wall may have a larger wall thickness than the sealing wall, and
   at least the two concave parts of the upper connecting region adjacent to the sealing wall may have a smaller wall thickness than the sealing wall.
   According to the item (2), because at least the two concave parts of the upper connecting region adjacent to the sealing wall have the smaller wall thickness than the sealing wall, it is reliably performed that the regions of the upper connecting region mainly corresponding to the concave parts are more easily deformed. Moreover, when the upper connecting region is deformed, the stress is dispersed also to the convex parts which are adjacent to the convex parts. However, because the convex parts have the larger wall thickness than the sealing wall, strength of the region corresponding to the corrugated part is not so weak. In other words, a total volume is secured due to presence of the convex parts, even though the concave parts exist. Accordingly, it is possible to more reliably restrain the wear-out.
(3) In the invention, an average wall thickness of at least the adjacent two convex parts and at least the adjacent two concave parts in the upper connecting region may be substantially equal to the wall thickness of the sealing wall.
   According to the item (3), the average wall thickness of at least the two convex parts adjacent to the sealing wall and at least the two concave parts adjacent to the sealing wall is substantially equal to the wall thickness of the sealing wall. In other words, at both sides of a phantom reference line which is smoothly extended from the hollow side of the sealing wall to the upper connecting region in a sectional view of the seal part, at least the two concave parts adjacent to the sealing wall are recessed by a determined height, and at least the two convex parts adjacent to the sealing wall are protruded by the same determined height. Therefore, it is possible to deform the regions corresponding to the concave parts more positively, without incurring decrease in the total volume of the upper connecting region. As the results, the wear-out in the upper connecting region can be more reliably prevented.
(4) In the invention, the corrugated part may be formed of curved faces in its entirety.
   In case where a part of the corrugated part, for example, bottom parts of the concave parts are angled, concentration of the stress is likely to occur in the angled parts, and it is concerned that a wear-out or crack may occur. According to the item (4); the corrugated part is formed of the curved faces its entirety, and a so-called angled part does not exist. As the results, the above described concern of cracks or so can be eliminated.
(5) In the invention, the fitting base part may have an arm part extended downward therefrom, at an outer peripheral side, and having its distal end connected to a lower end of the seal part,
   the arm part may be configured to be tilted toward the fitting base part around its base end as a pivot, when said movable panel closes the roof opening.
   According to the item (5), the upper part of the seal part is deformed in the upper connecting region, and the lower part of the seal part is deformed, since the arm part is tiled toward the fitting base part around its base end as the pivot. Accordingly, sealing is realized based on elastic repulsive force of the upper connecting region in the upper part of the seal part, and based on recovering repulsive force of the arm part in the lower part of the seal part. As the results, by utilizing the repulsive forces which are different from each other as described above, it is possible to realize the sealing based on complementary relation between the repulsive forces, while taking advantages of both the forces.
(6) In the invention, the fitting base part and the arm part may be formed of solid material and the seal part may be formed of sponge material.

According to the item (6), sealing can be realized with the materials which are different from each other in the upper part and in the lower part of the seal part. Therefore, the operation and advantage of the above described item (5) can be more reliably obtained.

### BRIEF DESCRIPTION OF THE DRAWINGS

Fig. 1 is a perspective view schematically showing a roof panel and so on of an automobile in an embodiment of the invention.
Fig. 2 is a plan view showing a roof weather strip.
Fig. 3 is a sectional view of a part of the roof weather strip corresponding to a front end side of a movable panel, taken along a line J-J in Fig. 2.
Fig. 4 is a partially enlarged sectional view for describing a structure of an upper connecting region (a corrugated part) .
Fig. 5 is a sectional view showing a seal part and so on, at a time of closing a roof opening.

### DETAILED DESCRIPTION OF THE PREFERRED EMBODIMENTS

Now, an embodiment of the invention will be described referring to the drawings.

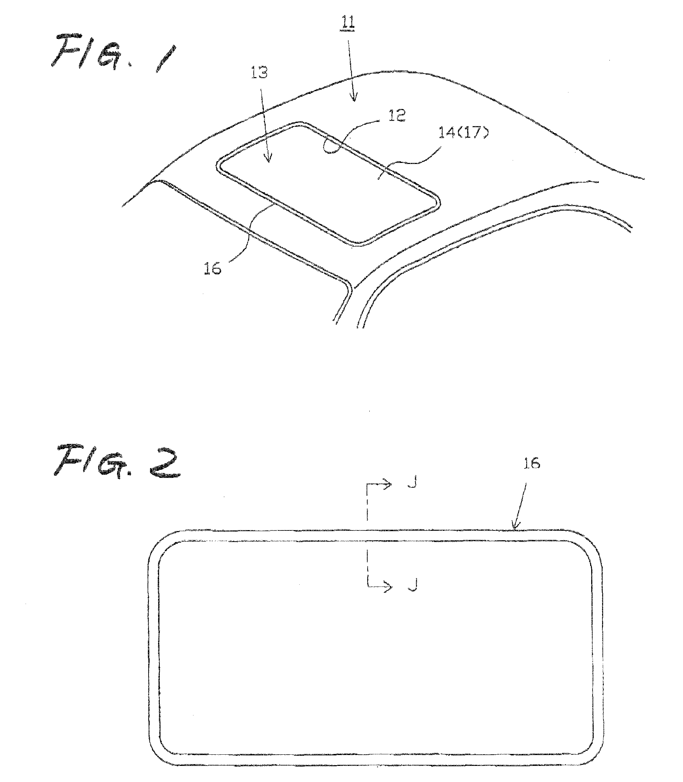

As shown in Fig. 1, a roof opening 12 in a substantially rectangular shape is formed in a roof panel 11 of an automobile as a vehicle. A movable roof 13 is provided so as to close the roof opening 12. The movable roof 13 is so configured as to be tilted and slid. These tilting and sliding motions are realized when a driver operates a switch (not shown) which is provided inside a vehicle room. Moreover, these tilting and sliding motions are realized by means of a drive mechanism, a link mechanism and so on which are not shown.

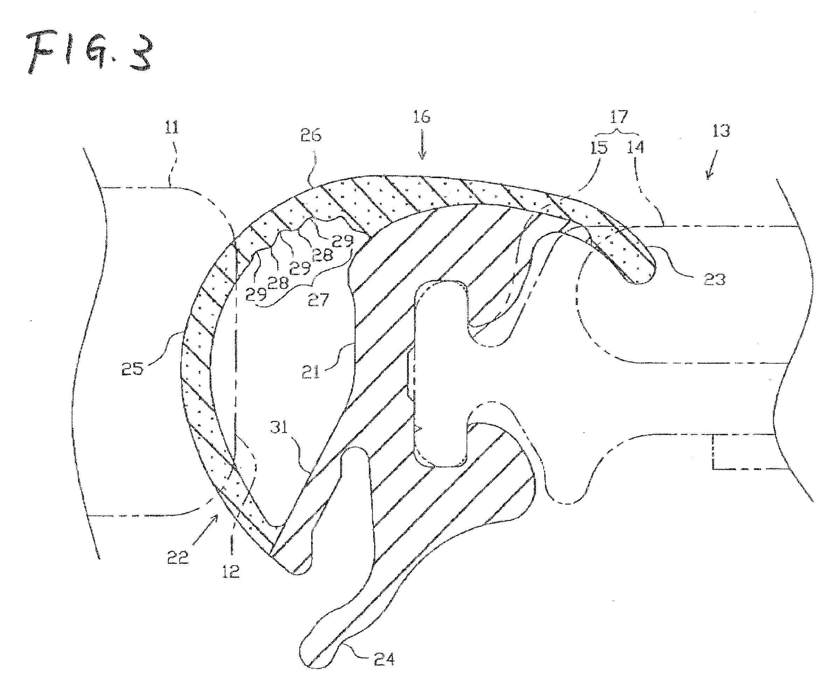

In this embodiment, the movable roof 13 includes a glass panel 14 which occupies almost all regions thereof in a plan view, a mold part 15 formed of synthetic resin and provided around the glass panel 14 in a frame-like shape (See Fig. 3), and a roof weather strip 16 which is fitted to an outer edge of the mold part 15. In this embodiment, a movable panel 17 is composed of the glass panel 14 and the mold part 15. Of course, it is possible to employ a panel formed of resin or metal in place of the glass panel 14, and in this case, it is also possible to form the mold part integrally with the panel.

A₅ shown in Figs. 2 and 3, the roof weather strip 16 is annularly formed in a substantially rectangular shape along an outer contour of the movable panel 17 . In this embodiment, almost all the region in a. substantially longitudinal direction of the roof weather strip 16 is formed by extrusion molding, and end edges thereof are connected, to each other in a part of the roof weather strip (at a front end, for example) by cavity molding (not shown, in the drawings).

As shown in Fig. 3 which is a sectional view of a part corresponding to a backward end of the movable panel 17, the weather strip 16 (at least the part formed by extrusion molding) includes a fitting base part 21 and a hollow seal part 22 having a hollow part which is integrally formed with the fitting base part 21. The fitting base part 21 is formed of EPDM sold rubber, for example, and fitted over the mold part 15 so as to clamp it from upside and downside to be fixed thereto.

The seal part 22 is formed of EPEM sponge rubber, and provided so as to be outward at an outer peripheral side of the fitting base part 21 (at the left side in Fig. 3). The sealpart 22 is integrally formed with a covering lip 23 which is formed of EPDM sponge rubber in the same manner as the seal part 22 and extended toward an inner peripheral side, above the fitting base part 21, so as to cover a boundary between the mold part 15 and the glass panel 14. Moreover, the fitting base part 21 has a projected part 24 which is formed of EPDM solid rubber and integrally formed with a lower part thereof so as to project downward at the outer peripheral side.

By the way, the aforesaid seal part 22 has a sealing wall 25 which is configured to be brought into pressure contact with a peripheral part of the roof panel 11 forming the roof opening 12, when the movable roof 13 closes the roof opening 12. The sealing wall 25 contains a part of the seal part 22 which positioned at the outermost peripheral side. In addition, the seal part 22 has an upper connecting region 26 which connects the sealing wall 25 to an upper part of the fitting base part 21.

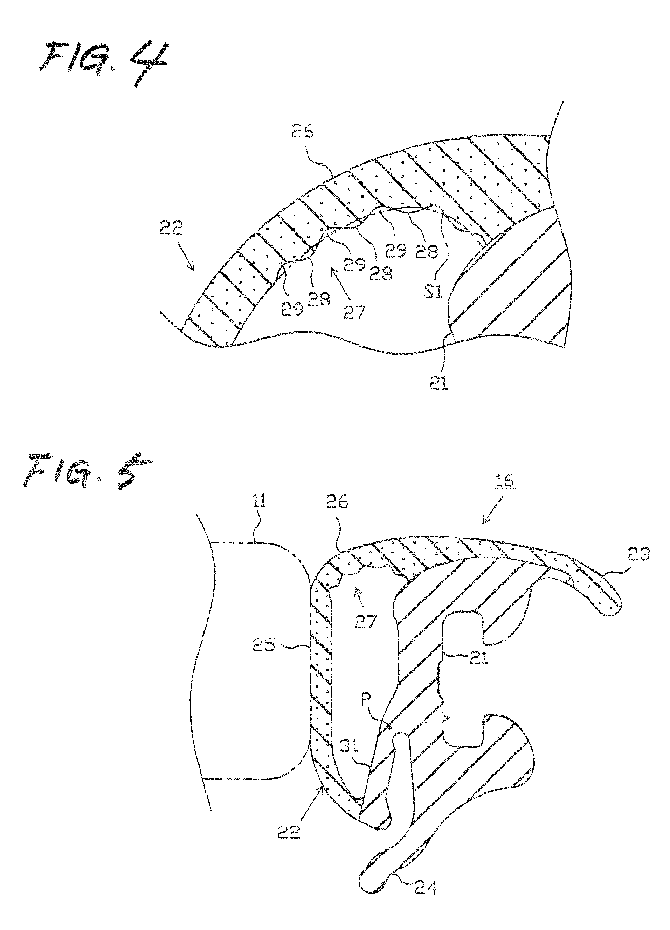

In this embodiment, the upper connecting region 26 is provided with a corrugated part 27 which is formed on an inner face thereof at a side opposed to the hollow space, and this corrugated part 27 has a plurality of convex parts 28 and concave parts 29 alternately formed. In this embodiment, a wall thickness of the convex part 28 is larger than a wall thickness of the sealing wall 25 (for example, 0.8mm in this embodiment). Out of the concave parts 29, the three (at least two) concave parts 29 adjacent to the sealing wall 25 have a smaller wall thickness than the sealing wall 25. Moreover, an average wall thickness of the two convex parts 28 and the two concave parts 29 adjacent to the sealing wall 25 is set to be substantially equal to the wall thickness of the sealing wall 25, More specifically, provided that a smooth phantom reference line S1 (a two dot chain line in Fig. 4) is drawn so as to extend from the sealing wall 25, the concave parts 29 are recessed by a determined height, and the convex parts 28 are protruded by the same determined height at both sides of the phantom reference line S1. In other words, the convex parts 28 and the concave parts 29 are so set as to have the same amplitude with respect to the phantom reference line S1. Further, the corrugated part 27 is composed of curved faces in its entirety so that any angled part may not exist.

In this embodiment, the fitting base part 21 is integrally formed with an arm part 31 which is formed of EPDM solid rubber and provided above the aforesaid projected part 24 so as to extend downward from the fitting base part 21 at the outer peripheral side. A distal end of this arm part 31 is connected to a lower end of the seal part 22. The arm part 31 is configured to be tilted toward the fitting base part 21 around its base end as a pivot (a point P in Fig. 5, for example), when the roof opening 12 is closed (See Fig. 5).

Then, operation and advantage of this embodiment having the above described structure will be described.

When the roof opening 12 is closed, the sealing wall 25 of the seal part 22 is brought into pressure contact with the peripheral part of the roof panel 11 forming the roof opening 12, whereby the movable panel 17 is sealed with respect to the roof panel 11 of the vehicle. In this embodiment, the corrugated part 27 in which a plurality of the convex parts 28 and the concave parts 29 are alternately formed is provided on the inner face opposed to the hollow space of the upper connecting region 26 of the seal part 22 which connects the sealing wall 25 to the upper part of the fitting base part 21. For this reason, regions of the upper connecting region 26 corresponding to the concave parts 29 are more likely to be deformed. Therefore, even though some variations may occur in producing or assembling the movable panel 17, and a gap between the movable panel 17 and the roof panel 11 is made narrower than a determined gap (5.0mm for example, in this embodiment) such a phenomenon that load applied to the seal part 22 may be extraordinarily increased at the time of closing will be restrained. As the resuits, it is possible to restrain occurrence of a strange noise such as squeaking sound or bang.

Moreover, a plurality of the concave parts 29 of the corrugated part 27 exist in the upper connecting region 26, and therefore, stress is more easily dispersed, as compared with the related art in which the stress may be concentrated on one point . Accordingly, occurrence of a wear-out attributed to the concentration of stress can be restrained, and as the results, it is possible to restrain deterioration of the sealing performance,

Further, the wall thickness of the convex parts 28 is larger than the wall thickness of the sealing wall 25, and out of the concave parts 29, the three (at least two) concave parts 29 adjacent to the sealing wall 25 have the thinner wall thickness than the sealing wall 25. Moreover, the average wall thickness of the two convex parts 28 and the two concave parts 29 adjacent to the sealing wall 25 is set to be substantially equal to the wall thickness of the sealing wall 25. Therefore, the regions corresponding to the concave parts 29 can be deformed more positively, without incurring decrease in volume of the whole upper connecting region 26. As the results, it is possible to more reliably prevent occurrence of the wear-out in the upper connecting region 26, In addition, because the corrugated part 27 is composed of the curved faces in its entirety, it is possible to eliminate such anxiety that cracks may occur due to existence of angled parts.

Still further, in this embodiment, the arm part 31 which is formed of EPDM solid rubber is integrally formed with the fitting base part 21 so as to extend downward therefrom at the outer peripheral side, and the distal end of this arm part 31 is connected to the lower end of the seal part 22. The arm part 31 is configured to be tilted toward the fitting base part 21 around its base end as the pivot, when the roof opening 12 is closed. Specifically, the upper part of the seal part 22 is deformed in the upper connecting region 26, and the lower part of the seal part 22 is deformed, since the arm part 31 is tiled toward the fitting base part 21 around its base end as the pivot. Accordingly, sealing is realized based on elastic repulsive force of the upper connecting region 26 in the upper part of the seal part 22, and based on recovering repulsive force of the arm part 31 in the lower part of the seal part 22. As the results, by utilizing the repulsive forces which are different from each other as described above, it is possible to realize the sealing based on complementary relation between the repulsive forces, without incurring extraordinary increase of the load at time of closing.

The invention is not limited to those described in the above described embodiment, but may be modified as follows, for example. It is apparent that other applications and modifications which, are not exemplified in the following can be naturally made.
(a) Although in the above described embodiment, the substantially entire region in the longitudinal direction of the roof weather strip 16 is formed by extrusion molding, it would be sufficient that at least a part of the roof weather strip 16 corresponding to the backward end part of the movable panel 17 has such a sectional shape as described above. Therefore, it does not matter that the regions corresponding to the both side edges or the front end edge of the movable panel 17 have the sectional shape which is different from the above. Alternatively, the roof weather strip 16 may be so constructed that the two extruded parts are connected by molding in the two corner parts at the backward end part, for example, so as to form an annular shape.
(b) In the above described embodiment, the arm part 31 formed of EPDM solid rubber is integrally formed so as to extend from the fitting base part 21 downward at the outer peripheral side, having its distal end portion connected to the lower end of the seal part 22, and when the roof opening 12 is closed, the arm part 31 is configured to be tilted toward the fitting base part 21 around the base end thereof as the pivot. However, the arm part 31 may be omitted. Alternatively, instead of providing the arm part 31, a lower connecting region (not shown) having a corrugated part 27 in the manner as the upper connecting region 26 may be also provided in the lower part of the seal part 22.
   Further, the corrugated part 27 may he provided on the sealing wall 25 too.
(c) Although in the above described embodiment, the corrugated part 27 is formed of the curved faces in its entirety, it is possible to form the corrugated part 27 in a trapezoidal shape or in a triangular shape in section. Alternatively, the corrugated part 27 may be formed in a pulse waveform in section.
(d) Although in the above described embodiment, the roof weather strip 16 is formed of EPDM rubber, it may be formed of other rubber material. Alternatively, the roof weather strip 16 may be formed of resin material such as TPO (thermoplastic olefin elastomer) .

## Claims

1. A roof weather strip (16) in an annular shape to be fitted to an outer peripheral, part of a movable panel which can open and close a roof opening formed in a roof panel of a vehicle, said roof weather strip including, at least in a region corresponding to a backward end part of said movable panel,
a fitting base part (21) to be fitted to said movable panel, and
a seal part (22) having a hollow part and expanded outwardly from said fitting base part (21)
wherein said seal part (22) has a sealing wall (25) to be brought into pressure contact with a peripheral part of said roof panel forming said roof opening when said movable panel is closing said roof opening, and an upper connecting region (26) which connects said sealing wall (25) to an upper part of said fitting base part (21), and
said upper connecting region (26) is provided with a corrugated part (27) including a plurality of convex parts (28) and concave parts (29) alternately formed, on an inner surface thereof opposed to said hollow space.

2. A roof weather strip as claimed in claim 1, wherein at least two convex parts (28) of said upper connecting region (26) adjacent to said sealing wall (25) have a larger wall thickness than said sealing wall (25), and
at least two concave parts (29) of said upper connecting region (26) adjacent to said sealing wall (25) have a smaller wall thickness than said sealing wall (25).

3. A roof weather strip as claimed in claim 2, wherein an average wall thickness of said at least adjacent two convex parts (28) and said at least adjacent two concave parts (29) in said upper connecting region (26) is substantially equal to a wall thickness of said sealing wall (25).

4. A roof weather strip as claimed in claim 1, wherein said corrugated part (27) is formed of curved faces in its entirety.

5. A roof weather strip as claimed in claim 1, wherein said fitting base part (21) has an arm part (31) extended downward therefrom at an outer peripheral side, and having a distal end thereof connected to a lower end of said seal part (22),
said arm part (31) being configured to be tilted toward said fitting base part (21) around a base end thereof as a pivot, when said movable panel closes said roof opening.

6. A roof weather strip as claimed in claim 5, wherein said fitting base part (21) and said arm part (31) are formed of solid Material, and said seal part (22) is formed of sponge material.
